# EUROPEAN PATENT APPLICATION

(11) **EP 4 530 708 A1**
(43) Date of publication of application: **02.04.2025**
(21) Application number: 23200563.7
(22) Date of filing: 28.09.2023
(51) Int. Cl.: G02C 11/06, G02C 11/00, H04R 1/02, H04R 1/10, H04R 25/00

(54) **EYEWEAR COMPRISING A SPEAKER ASSEMBLY**

(71) Applicant: Essilor International, 94220 Charenton-Le-Pont (FR)
(72) Inventor: THARRETT, Dallas, Mason, OH 45040 (US); ROBERTS, Cory, Dighton, MA 02715 (US)
(74) Representative: Biallo, Dario

(57) **Abstract**

Eyewear comprising at least a temple, the temple having a cavity open to the outside through a first hole and a second hole positioned opposite from each other along a transversal direction, the eyewear comprising a speaker assembly mounted inside the cavity, the speaker assembly comprising a speaker operable to reproduce a sound, a speaker enclosure that houses the speaker and a processing unit configured to control the operation of the speaker, the speaker comprising a diaphragm designed to move in order to produce the sound, the diaphragm dividing an internal volume of the speaker enclosure into a front cavity and a back cavity that are open to the outside of the speaker enclosure respectively through a front opening and a back opening, the speaker assembly being mounted inside the cavity so as to create an air communication between the front opening and the first hole and between the back opening and the second hole, the back opening being positioned so as to directly face the second hole.

## Description

The present invention refers to eyewear, and in particular to a spectacles' frame comprising a speaker assembly, for example a smart glasses' frame comprising a speaker assembly.

As it is known, smart glasses consist in spectacles which comprise electronic devices adapted to support the activities carried out by the wearer and to provide the wearer with additional sensory information.

In particular, smart glasses may comprise an electronic device configured to reproduce audio, like a speaker assembly, in order to provide the wearer with hearable information or to allow the wearer to listen to music while wearing the smart glasses, without any need of additional headphones. Furthermore, if the smart glasses are equipped with one or more microphones, such a speaker assembly could be used to provide the wearer with a volume-enhanced reproduction of the sounds present in the environment: this could be particularly useful for people with hearing impairment, allowing them to better understand what the people in the environment are saying. Smart glasses' speaker assemblies are usually integrated into the temples of the spectacles and in particular into the terminal part thereof, in order to be as close as possible to the wearer's ear when the spectacles are worn. In such case each temple has a cavity designed to house a speaker assembly, and this cavity is open to the outside of the temple through at least a first hole directed downwards, i.e. towards the ear of the wearer: the acoustic pressure soundwaves produced by the speaker assembly can therefore reach the wearer's ear passing through this first hole.

The cavity is open to the outside of the temple also through at least a second hole directed upwards, i.e. in opposite direction with respect to the first hole: this second hole allows the back-soundwaves (i.e. the air-pressure waves that necessarily emanate from the back side of the speaker assembly when it produces soundwaves) to exit the temple without interfering with the soundwaves directed towards the wearer's ear.

The speaker assembly usually comprises a speaker, a speaker enclosure housing the speaker and a printed circuit board connected to the speaker in order to regulate the functioning thereof: the speaker enclosure has a front opening in fluid communication with the first hole of the temple, and a back opening in fluid communication with the second hole of the temple, and is fixed to the internal surface of the temple by installing the outwards-facing temple cover.

However, the known solutions have some drawbacks. First of all, the acoustical output at the wearer's ear is not optimal and a relevant part of the acoustical output is radiated into the environment, creating disturbance and privacy problems to the wearer. Furthermore, the acoustical output of the known solutions is usually characterized by distortions and low-quality audio reproduction. Furthermore, the known speaker assemblies are bulky and complex, and so their insertion into the temple negatively affects the design of the spectacles, the factory assembly ease and the factory testing earliness: in fact, the known speaker assemblies can be tested in factory only after being fixed inside the temple by installing the temple cover, and therefore, if the testing reveals that the speaker assembly is defective, the entire temple should be disassembled or discarded.

The object of the present invention is to overcome the above-mentioned drawbacks and in particular to realize eyewear comprising a speaker assembly which minimizes the part of the acoustical output which is radiated into the environment, minimizes the distortions and maximizes the quality of the acoustical output directed towards the wearer's ear, does not modify the eyewear's design, is easy to assemble and can be tested earlier than the speaker assemblies already known.

A further object of the present invention is to realize eyewear that provides the wearer with a high-quality volume-enhanced reproduction of the sounds present in the environment.

These and other results are achieved according to the present invention realizing eyewear according to claim 1.

Further characteristics of the eyewear are the object of the dependent claims.

The present invention will be now described, in an illustrative and non-limiting way, referring to the attached schematic drawings, in which:
- figure 1 is a prospective view of eyewear according to a preferred embodiment of the invention;
- figure 2 is a sectional view of figure 1;
- figure 3 is a magnified view of a particular of figure 2;
- figure 4 is a prospective view of a speaker assembly according to the invention;
- figure 5 is a rear view of figure 4.

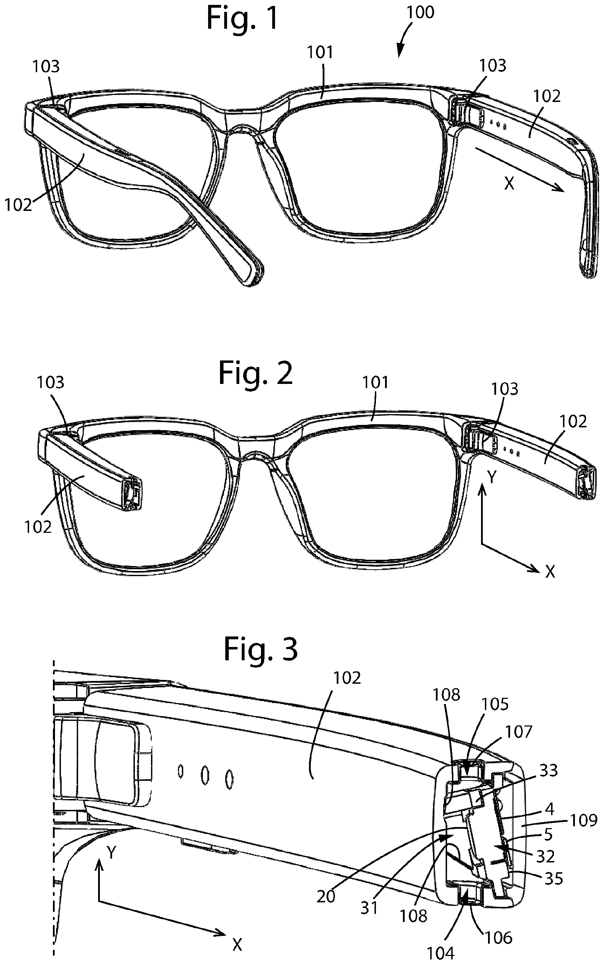

With reference to figure 1, a piece of eyewear is globally referred to as 100. In particular, in the following and in the figures the piece of eyewear 100 is described and represented as a spectacles' frame 100, but the piece of eyewear 100 could consist in any head-mountable device preferably designed to be worn over at least one eye of a wearer and comprising at least a temple part configured to be positioned in proximity of an ear of the wearer.

In the preferred embodiment shown in figure 1, the frame 100 comprises a front 101 and two temples 102 connected to the front 101 through two hinge assemblies 103, so that each temple 102 can rotate with respect to the front 101 around a rotation axis that is perpendicular to a temple's longitudinal direction X along which the temple 102 extends.

With reference to figure 2 and 3, at least one (preferably both) of the temples 102 has a cavity configured to house a speaker assembly 1. The cavity is open to the outside of the temple 102 through a first hole 104 and a second hole 105 that are disposed on opposite sides of the temple 102 along a transversal direction Y that is perpendicular to the longitudinal direction X. More in detail, the first hole 104 is directed downwards, i.e. in use towards the wearer's ear, while the second hole 105 is directed upwards.

The first hole 104 and the second hole 105 are covered respectively by a first cap 106 and a second cap 107 designed to prevent dust and dirt from entering the cavity.

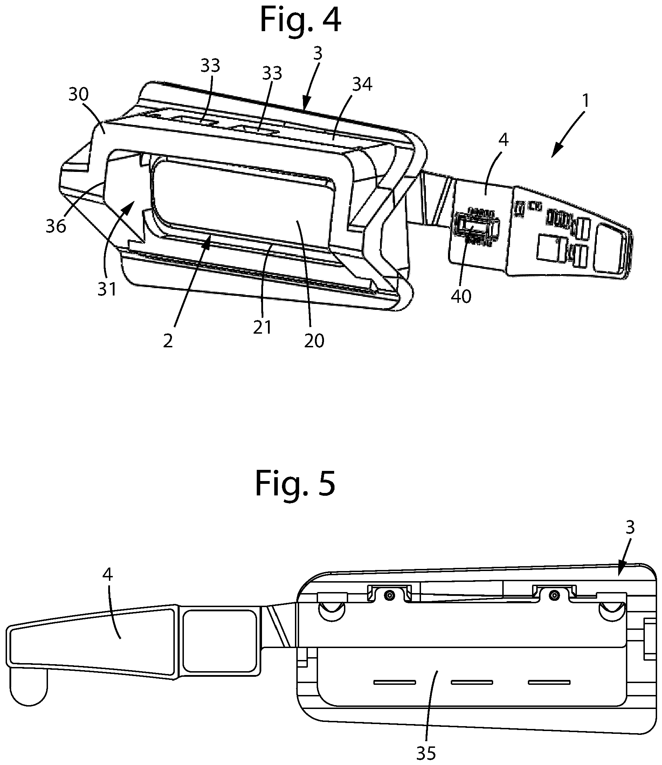

With reference to figure 4, the speaker assembly 1 comprises a speaker 2, a speaker enclosure 3 and a processing unit 40 mounted preferably on a printed circuit board 4.

The speaker 2 is operable to reproduce a sound and comprises a diaphragm 20 designed to move (in particular to vibrate) in order to produce the sound, a suspension 21 and diaphragm moving means (not shown in the figures) . However, it is clear that the speaker 2 could consist in any sound producing device having a diaphragm designed to generate a sound.

The speaker 2 is housed inside the speaker enclosure 3, which is fixed to the cavity of the temple 102, for example by means of glue.

More in detail, the speaker enclosure 3 has a gluing surface 30 configured to be glued to a corresponding internal surface 108 (shown in figure 3) of the cavity of the temple 102.

The diaphragm 20 is positioned in such a way to divide the internal volume of the speaker enclosure 3 into a front cavity 31 and a back cavity 32 (shown in figure 3). The front cavity 31 is open to the outside of the speaker enclosure 3 through a front opening 36 such that, when the speaker enclosure 3 is fixed to the temple 102 by gluing the gluing surface 30 to the internal surface 108, an air communication (preferably substantially air-tight) is created between the front opening 36 and the first hole 104: the acoustic pressure soundwaves produced in the front cavity 31 by the movement of the diaphragm 20 can therefore reach the wearer's ear passing through the first hole 104.

The back cavity 32 houses the diaphragm moving means, and is open to the outside of the speaker enclosure 3 through a back opening 33 such that, when the speaker enclosure 3 is fixed to the temple 102 by gluing the gluing surface 30 to the internal surface 108, an air communication (preferably substantially air-tight) is created between the back opening 33 and the second hole 105: the back-soundwaves produced in the back cavity 32 by the movement of the diaphragm 20 can therefore exit the cavity of the temple 102 passing through the second hole 105.

In particular, the back opening 33 is positioned so as to directly face the second hole 105 when the speaker assembly 1 is mounted inside the cavity: this means that the back-soundwaves that exit from the back cavity 32 follow a straight-line trajectory to reach the second hole 105, without passing through any more cavities and minimizing the distance to be travelled. In fact, it has been understood that the distortions and the low quality of the sound reproduced by the speaker assemblies of the prior art are caused by a twisted and labyrinthine trajectory of the back-soundwaves that exit from the back cavity.

More in particular, the speaker enclosure 3 has a top wall 34 that faces the second hole 105 and is substantially perpendicular to the diaphragm 20, in such a way to allow the desired sound diffusion, and a back wall 35 (shown in figure 3) that delimits the back cavity 32 being opposite and substantially parallel to the diaphragm 20: the back opening 33 is realized in the top wall 34, instead of being realized in the back wall 35 as in the known speaker assemblies. This fact allows to have a larger back opening 33, optimizing the venting of the back-soundwaves out of the back cavity 32 and therefore reducing the distortions, and also allows to reduce the volume of the back cavity 32, increasing the relative resonant frequency and therefore increasing the quality of the sound and reducing the portion of the acoustic output that is radiated into the environment. Advantageously, the speaker enclosure 3 has an auxiliary back opening 37 that directly faces said second hole 105 and is adjacent to the back opening 33.

Again with reference to figure 4, the gluing surface 30 at least partially delimits the front opening 36. In particular, the gluing surface 30 entirely surrounds the front opening 36 in such a way that, when the gluing surface 30 is glued to the internal surface 108, the air communication between the front opening 36 and the first hole 104 is substantially air-tight, forming an acoustic seal between the speaker enclosure 3 and the internal surface 108 of the temple 102. This makes it possible to test the speaker assembly 1 before installing the outwards-facing temple cover 109 (shown in figure 3) that closes the cavity of the temple 102, since the air communication between the front opening 36 and the first hole 104 is already substantially air-tight without the need to install the temple cover 109.

More in particular, the gluing surface 30 lies at least partially on a plane that is oblique with respect to the diaphragm 20 and the back wall 35: in this way a steady gluing is favoured between the gluing surface 30 and the internal surface 108, further favouring the air-tight character of the connection, and the glue application could be performed with the existing dispensing technology.

The fact that the back opening 33 is made in the top wall 34 of the speaker enclosure 3, instead of being made in the back wall 35 of the speaker enclosure 3 as in the prior art, also leaves the back wall 35 free for fixing to it the printed circuit board 4 (as shown in figure 5), which extends along the cavity of the temple 102: this allows to connect the processing unit 40 to the speaker 2 through the back wall 35, the processing unit 40 being configured to control the operation of the speaker 2.

The printed circuit board 4 is preferably flexible in order to be easily mounted inside the cavity of the temple 102.

The fact that the connection between the processing unit 40 and the speaker 2 is realized in a straightforward way through the back wall 35 of the speaker enclosure 3 allows to avoid more complex electrical connections, and so allows to avoid any modifications of the spectacles' design. Moreover, such a simple design of the electrical connection between the processing unit 40 and the speaker 2 makes it particularly easy to assemble the speaker assembly 1 inside the cavity of the temple 102. Furthermore, this design of the electrical connection between the processing unit 40 and the speaker 2 makes the speaker assembly 1 particularly small-sized, making it possible to increase the dimension, and therefore the life, of the battery (not shown in the figures) that is housed inside the cavity of the temple 102 and provides power supply to the speaker assembly 1.

With reference to figure 5, the fact that the back wall 35 of the speaker enclosure 3 has no back openings makes it possible to place an auxiliary printed circuit board 5 (in part shown in figure 3) adjacent to the printed circuit board 4, between the back wall 35 and the temple cover 109.

In fact, the spectacles' frame 100 preferably comprises at least a microphone (not shown in the figures) that could be supported for example by the front 101 or by one of the temples 102 and is configured to pick up sounds from the environment and to generate a corresponding microphone signal. The microphone is connected to the processing unit 40 through the auxiliary printed circuit board 5, which is preferably flexible in order to be easily mounted inside the cavity of the temple 102. In this way the microphone signal is received by the processing unit 40, which elaborates it generating a speaker signal and transmits the speaker signal to the speaker 2, therefore controlling the operation of the speaker 2: the wearer could therefore be provided with a volume-enhanced reproduction of the sounds present in the environment. In particular, this could help people with hearing impairment to understand what the people in the environment are saying.

The present invention has been described in an illustrative and non-limiting way according to relative favourite embodiments, but it is clear that the person skilled in the art could perform many variations and modifications, all of which are within the scope of the invention.

## Claims

1. Eyewear (100) comprising at least a temple (102), said temple (102) having a cavity open to the outside through a first hole (104) and a second hole (105) positioned opposite from each other along a transversal direction (Y), the eyewear (100) comprising a speaker assembly (1) mounted inside said cavity, said speaker assembly (1) comprising a speaker (2) operable to reproduce a sound, a speaker enclosure (3) that houses said speaker (2) and a processing unit (40) configured to control the operation of said speaker (2), said speaker (2) comprising a diaphragm (20) designed to move in order to produce said sound, said diaphragm (20) dividing an internal volume of said speaker enclosure (3) into a front cavity (31) and a back cavity (32) that are open to the outside of said speaker enclosure (3) respectively through a front opening (36) and a back opening (33), the speaker assembly (1) being mounted inside said cavity so as to create an air communication between said front opening (36) and said first hole (104) and between said back opening (33) and said second hole (105), **characterized in that** said back opening (33) is positioned so as to directly face said second hole (105) .

2. Eyewear (100) according to claim 1, **characterized in that** it comprises at least a microphone configured to generate a microphone signal, said processing unit (40) being configured to receive said microphone signal, to elaborate said microphone signal generating a speaker signal and to transmit said speaker signal to said speaker (2).

3. Eyewear (100) according to claim 2, **characterized in that** said microphone is connected to said processing unit (40) through an auxiliary printed circuit board (5), said processing unit (40) being mounted on a printed circuit board (4), said printed circuit board (4) and auxiliary printed circuit board (5) being positioned adjacent to each other between a back wall (35) of said speaker enclosure (3) and a temple cover (109) of said temple (102).

4. Eyewear (100) according to any of claims 1 to 3, **characterized in that** said speaker enclosure (3) has a top wall (34) that faces said second hole (105), said back opening (33) being realized in said top wall (34).

5. Eyewear (100) according to claim 4, **characterized in that** said diaphragm (20) is substantially perpendicular to said top wall (34).

6. Eyewear (100) according to claim 5, **characterized in that** said speaker enclosure (3) has a back wall (35) that delimits said back cavity (32) and is opposite to said diaphragm (20), said processing unit (40) being connected to said speaker (2) through said back wall (35) .

7. Eyewear (100) according to claim 6, **characterized in that** said processing unit (40) is mounted on a printed circuit board (4) that is fixed to said back wall (35).

8. Eyewear (100) according to claim 7, **characterized in that** said printed circuit board (4) is flexible.

9. Eyewear (100) according to any of the claims 1 to 8, **characterized in that** said speaker enclosure (3) has a gluing surface (30) configured to be glued to a corresponding internal surface (108) of said cavity.

10. Eyewear (100) according to claim 9, **characterized in that** said gluing surface (30) entirely surrounds said front opening (36).

11. Eyewear (100) according to claim 10, **characterized in that** said gluing surface (30) lies at least partially on a plane that is oblique with respect to said diaphragm (20) .

12. Eyewear (100) according to any of the claims 1 to 11, **characterized in that** said speaker enclosure (3) has an auxiliary back opening (37) that directly faces said second hole (105).

13. Head-mountable device (100) comprising at least a temple part (102) configured to be positioned in proximity of an ear of a wearer, said temple part (102) having a cavity open to the outside through a first hole (104) and a second hole (105) positioned opposite from each other along a transversal direction (Y), the eyewear (100) comprising a speaker assembly (1) mounted inside said cavity, said speaker assembly (1) comprising a speaker (2) operable to reproduce a sound, a speaker enclosure (3) that houses said speaker (2) and a processing unit (40) configured to control the operation of said speaker (2), said speaker (2) comprising a diaphragm (20) designed to move in order to produce said sound, said diaphragm (20) dividing an internal volume of said speaker enclosure (3) into a front cavity (31) and a back cavity (32) that are open to the outside of said speaker enclosure (3) respectively through a front opening (36) and a back opening (33), the speaker assembly (1) being mounted inside said cavity so as to create an air communication between said front opening (36) and said first hole (104) and between said back opening (33) and said second hole (105), **characterized in that** said back opening (33) is positioned so as to directly face said second hole (105).
